# EUROPEAN PATENT SPECIFICATION

(11) **EP 2 088 792 B1**
(45) Date of publication and mention of the grant of the patent: **30.03.2011**
(21) Application number: 07817010.7
(22) Date of filing: 28.09.2007
(51) Int. Cl.: H04L 12/58, H04W 88/18

(54) **SHORT MESSAGE CENTER AND SHORT MESSAGE TRANSMITTING METHOD**
KURZNACHRICHTENZENTRALE UND KURZNACHRICHTENÜBERTRAGUNGSVERFAHREN
CENTRE DE MESSAGES COURTS ET PROCEDE DE TRANSMISSION DE MESSAGES COURTS

(30) Priority: 08.11.2006 CN 200610123408
(43) Date of publication of application: 12.08.2009
(73) Proprietor: Huawei Technologies Co., Ltd., Longgang District, Shenzhen Guangdong 518129 (CN)
(72) Inventor: QU, Xingjun c/o Huawei Technologies Co. Ltd., Shenzhen Guangdong 518129 (CN)
(74) Representative: Thun, Clemens
(86) International application number: PCT/CN2007/070819
(87) International publication number: WO 2008/055432

(56) References cited:
- EP-A- 0 936 825
- WO-A-98/48587
- CN-A- 1 756 147
- CN-A- 1 949 894
- US-A1- 2004 095 889
- US-A1- 2006 068 761
- US-B1- 6 615 046

## Description

### Field of the Invention

The present disclosure relates to a short message center and a method for transmitting a short message, enabling a Service Provider to provide users with differentiated services.

### Background of the Invention

A short message service is applied increasingly widely as a serving means of assisting communication and serving consumers with an added value. Short message scheduling is typically accomplished through a short message center on such a primary scheduling principle that different scheduling queues are set in accordance with called numbers, different scheduling policies may be allocated for the different scheduling queues and accordingly the scheduling policy of the scheduling queue may be adjusted in accordance with the type of an error code fed back from a scheduling error to utilize effectively resources of the short message center.

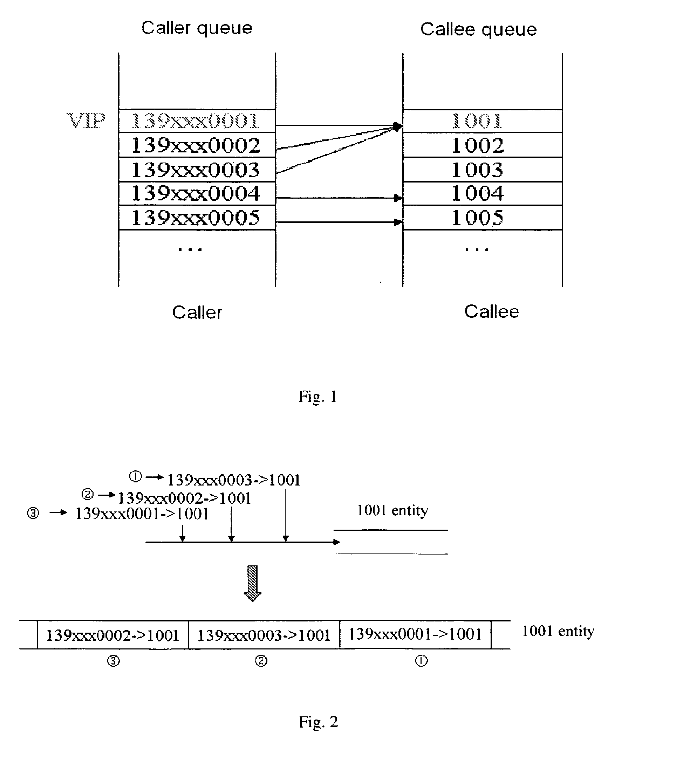

Currently, the short message center schedules short messages communicated between a Service Provider (SP) and end users based upon the above scheduling principle. Referring to Figure 1, for example, Figure 1 is a schematic diagram of existing scheduling of short messages between a Service Provider and users. The Service Provider provides a service with service access code (referred to as SP-num for example) of "1001", and a scheduling queue set for this service may be marked as a "1001" scheduling queue. Three end users of the service, such as 139XXXX0001, 139XXXX0002 and 139XXXX0003, each transmits a message to the Service Provider, and the three short messages will enter the "1001" scheduling queue. In accordance with the existing scheduling solution, the three short messages will enter the "1001" scheduling queue of the Service Provider in an order that they are submitted. The scheduling queue may also be referred to as a message entity.

Further referring to Figure 2, Figure 2 is a schematic diagram of scheduling short messages in the "1001" scheduling queue. If 139XXXX0001 belongs to a Very-Important-Person (VIP) user of the "1001" service, the short message sent from 139XXXX0001 will be placed at the first place in the "1001" scheduling queue and scheduled preferentially for transmission. However in the existing solution of scheduling short messages between the Service Provider and users, the short message scheduling policies are preset, in which for example, a short message that has not been transmitted will be deleted or the short message will be processed using backup routing in the case that a system may not send the message in time or a short message of a VIP user will be sent preferentially in the case that the system may send the short message normally.

In the existing solution of scheduling short messages between the Service Provider and users, the short message scheduling policy is actually implemented based upon short message routing policy instead of being set based upon different types of users, that is, the short message scheduling policy will not vary regardless of whether a user who transmits or receives a short message is a VIP user or a normal user. For example, the VIP user may be offered with VIP service by a policy that a short message of the VIP user will be scheduled preferentially in the case that the system may send the short message normally; however, in the case that the system may not sent the message normally, if the preset short message scheduling policy is that a short message that has not been scheduled will be deleted, a short message will be deleted from the scheduling queue, regardless of whether the short message is related to the VIP user or the normal user, and in this case, the VIP user actually may not be offered with any VIP service differentiated from the service offered to the normal user.

Consequently, it is difficult to provide different types of users with different services, i.e., differentiated services, based upon the existing solution of scheduling short messages between the SP and users.
In US Patent Application Publication No. US2004/0095889, methods and systems for routing wireless message service (WMS) messages in a communications network with a desired quality of service (QoS) are disclosed. The method comprises receiving an WMS message including mobile subscriber originating and destination party identification information; determining, based on at least one of the originating and destination party identification information, a QoS associated with the message; and routing the message to its intended destination with the indicated QoS.
In US Patent Application Publication No. US2006/0068761, a system and method for prioritizing a store-and-forward message in a store-and-forward data communication system is disclosed. The system comprises a priority system configured to generate a priority level for a store-and-forward message; and a store-and-forward network configured to receive the store-and-forward message, receive a request that requests priority processing and transmitting of the store-and-forward message, obtain the priority level from the priority system in response to the request, and process and transmit the store-and-forward message according to the priority level.
In European Patent Application No. EP 0936825, a method and system for processing a short message by a short message service center is provided. The method comprises assigning at least one service user to a first market segment; defining at least one storage variable and at least one delivery variable for the first market segment; receiving the short message from a message originator; storing the short message as a function of the storage variable; and delivering the short message to the at least one service user as function of the delivery variable.
In International Application Publication No. WO 98/48587, a method and apparatus for routing a short message with high or low priority from a service centre to a mobile station in a public land mobile network providing both packet data service and circuit switched service is provided

### Summary of the Invention

An embodiment of the disclosure provides a short message center and a method for transmitting a short message to provide differentiated services for different types of users.

In the embodiment of the invention, the short message center includes: a storage unit and a scheduling and processing unit, wherein:
the storage unit is adapted to store a correspondence relationship between an SP-side differentiated service identification corresponding to a user type and a short message scheduling policy corresponding to the differentiated service identification; and
the scheduling and processing unit is adapted to obtain a short message scheduling policy corresponding to a differentiated service identification by using the differentiated service identification corresponding to the user type and by using the correspondence relationship stored in the storage unit and schedule the received short message in accordance with the message scheduling policy, upon reception of a short message submitted from the user for being transmitted to a Service Provider (SP) to which the user belongs or upon reception of a short message submitted from the Service Provider for being transmitted to the user belonging to the SP, wherein the differentiated service identification comprises a value of a field of Type of Number (TON) and a value
of a field of Numbering Plan ID (NPI) on the SP side corresponding to the user type and an SP service access code.

An embodiment of the invention provides a method for transmitting a short message from a user to a Service Provider including:
receiving a short message, which is transmitted from a user to a Service Provider to which the user belongs;
obtaining a differentiated service identification corresponding to a user type of the user, and obtaining a corresponding short message scheduling policy in accordance with a preset correspondence relationship between the differentiated service identification and the short message scheduling policy corresponding to the differentiated service identification, wherein the differentiated service identification comprises a value of a field of Type of Number (TON) and a value of a field of Numbering Plan ID (NPI) on the SP side corresponding to the user type and an SP service access code; and
transmitting the short message to the Service Provider according to the short message scheduling policy.

An embodiment of the invention provides a method for transmitting a short message from a Service Provider to a user including:
receiving a short message, which is transmitted from a Service Provider to a user belonging to the SP;
obtaining a differentiated service identification corresponding to a user type of the user, and obtaining a corresponding short message scheduling policy in accordance with a preset correspondence relationship between the differentiated service identification and the short message scheduling policy corresponding to the differentiated service identification, wherein the differentiated service identification comprises a value of a field of Type of Number (TON) and a value of a field of Numbering Plan ID (NPI) on the SP side corresponding to the user type and an SP service access code; and
transmitting the short message to the user according to the short message scheduling policy.

The technical solutions provided in the embodiments of the invention present the following advantageous effects.

In accordance with the embodiments of the invention, correspondence relationships between differentiated service identifications of respective groups of users of differentiated services of the same Service Provider and different message scheduling polices are stored in advance at the short message center. In a scheduling process, the short message center obtains a corresponding message scheduling policy in accordance with the correspondence relationship and then performs scheduling of short messages between the SP and the users in accordance with the message scheduling policy, so that the Service Provider may provide the users with the differentiated services without influence on a service brand of the Service Provider, that is, in the case of the services corresponding to the SP-num.

### Brief Description of the Drawings

Figure 1 is a schematic diagram of short message scheduling in the prior art;

Figure 2 is a schematic diagram of short message scheduling for a VIP user in the prior art;

Figure 3 is a flow chart of a specific implementation of a method for transmitting a short message from users to a Service Provider according to an embodiment of the disclosure;

Figure 4 is a flow chart of a specific implementation of a method for transmitting a short message from a Service Provider to users according to an embodiment of the disclosure;

Figure 5 is a schematic diagram of a specific implementation of transmitting a short message in an uplink process from users to a Service Provider according to an embodiment of the disclosure;

Figure 6 is a schematic diagram of a specific implementation of transmitting a short message in a downlink process from a Service Provider to users according to an embodiment of the disclosure;

Figure 7 is a schematic diagram of a specific implementation of function modules in a short message center, which enable a Service Provider to provide differentiated services, according to an embodiment of the disclosure; and

Figure 8 is a schematic diagram of an embodiment of the scheduling and processing unit illustrated in Figure 7.

### Detailed Description of the Embodiments

A Service Provider (SP) typically provides different services for different groups of users belonging to the same service operator. The so-called group of users actually refers to a group that consists of the same type of users, for example, all VIP users may constitute a group of users and all normal users may constitute another group of users. Therefore at the service operator side, the service operator typically makes different groups of users belong to different user types. The above provision of different services by the SP for different groups of users is also provision of different services by the SP for different types of users, and these different services may also be referred to as differentiated services.

In the embodiments of the invention, different differentiated service identifications are set for different type of users belonging to the same Service Provider; correspondence relationships between the differentiated service identifications of the different type of users belonging to the same Service Provider and different message scheduling policies are preset at a short message center; and the differentiated service identification corresponding to the user type is carried in a short message communicated between the Service Provider and the user belonging to the Service Provider. In a specific implementation, the differentiated service identification may be set in a new field added in the short message or set in an existing extended field of the short message. Thus, the short message center inquiries the correspondence relationship in the short message center, in accordance with the differentiated service identification of the user type carried in the short message, obtains the message scheduling policy corresponding to the differentiated service identification and then performs differentiated scheduling on the short message in accordance with the message scheduling policy. Therefore, respective message scheduling polices are used for different user types of users to schedule relevant short messages so as to provide differentiated services for the different user types of users. Further, the different user types of users as referred to in this application belong to the same Service Provider.

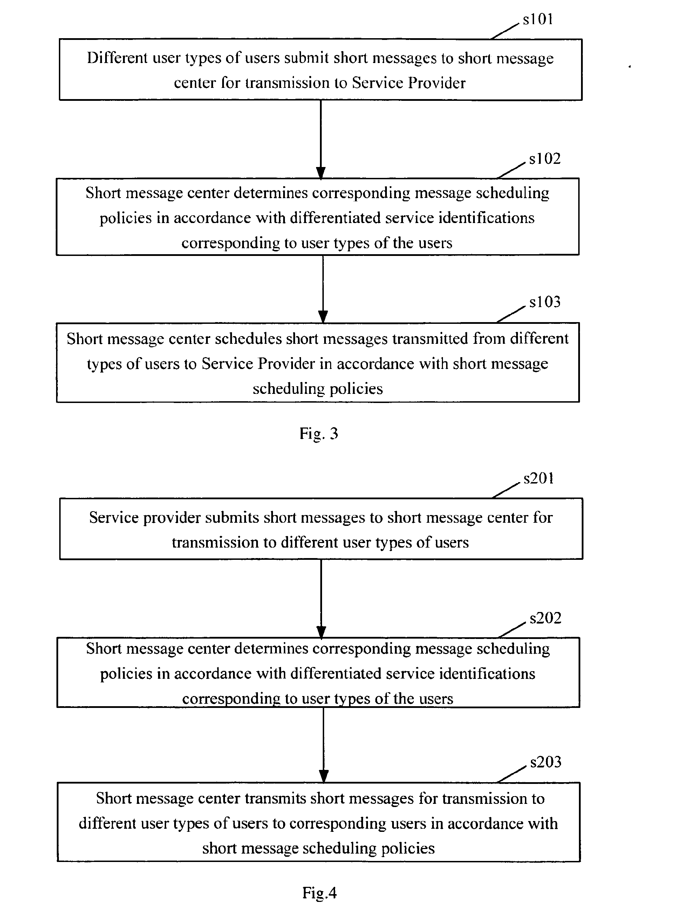

Referring to Figure 3, Figure 3 is a flow chart of a specific implementation of a method for transmitting a short message from users to a Service Provider according to the disclosure, which specifically includes the following flow.

Block s101: Different user types of users submit short messages to a short message center for transmission to a Service Provider.

Block s102: The short message center determines corresponding message scheduling policies, which as mentioned above may be preset at the short message center, in accordance with the differentiated service identifications of the user types.

Block s103: The short message center transmits the short messages from the different user types of users to the Service Provider in accordance with the message scheduling policies.

Referring to Figure 4, Figure 4 is a flow chart of a specific implementation of a method for transmitting a short message from a Service Provider to users according to an embodiment of the disclosure;

Block s201: A Service Provider submits short messages to a short message center for transmission to different user types of users.

Block s202: The short message center determines corresponding message scheduling policies in accordance with differentiated service identifications of the user types.

Block s203: The short message center schedules the short messages for transmission to the different types of users to the corresponding users in accordance with the message scheduling policies.

The user types corresponding to differentiated services may vary as types of the differentiated services provided by the SP vary, and the embodiments of the disclosure take two user types of VIP user and normal user for example. In a specific implementation, the same SP may set a plurality of scheduling queues for different user types, for example, one scheduling queue corresponding to the VIP user and another one corresponding, to the normal user, that is to say, it may be set that different scheduling queues correspond to different short message scheduling policies.

Generally, parameters of Type of Number (TON) and Numbering Plan ID (NPI) at the user side have been used and parameter values thereof are difficult to alter, while the parameters of TON and NPI at the SP side are often idle. Therefore in a specific implementation of the disclosure, a combination of an SP-sum with the Type of Number (TON) and the Numbering Plan ID (NPI) idle at the SP side may be used as a differentiated service identification, that is, a TON/SP-sum/NPI may be use as a differentiated service identification. Embodiments of realizing a differentiated service identification through the TON and the NPI will be described below.

In the present embodiment, differentiated service identifications of users of different user types are embodied through values of TON and NPI fields at the side of a Service Provider to which users belong, and different values of TON/SP-sum/NPI fields correspond to different message scheduling policies. For example, for a Service Provider with the SP-num of "0001", the TON/SP-num/NPI in the embodiment may be "1/1001/1" and "0/1001/1", that is, for users of the "1001" service provided by the Service Provider, "0/1001/1" may be set as a differentiated service identification of a VIP user and "1/1001/1" may be set as a differentiated service identification of a normal user in the embodiment. A message scheduling policy with a relatively high security guarantee may be adopted for a short message between the Service Provider and the VIP user to ensure smooth issuing of the short message; and a short message between the Service Provider and the normal user may be scheduled in accordance with a normal message scheduling policy. Therefore, different message scheduling policies may be adopted for message scheduling with respect to different user types of the Service Provider.

Further in the embodiment, the short message center is provided with a number replacement and modification function of modifying the TON/SP-num/NPI in a short message and a TON/SP-num/NPI based message scheduling capability, where the number replacement and modification function of modifying the TON/SP-num/NPI is primarily to modify the values of TON and NPI fields in the TON/SP-num/NPI field to embody different differentiated service identifications for different user types of users provided with differentiated services by the same Service Provider.

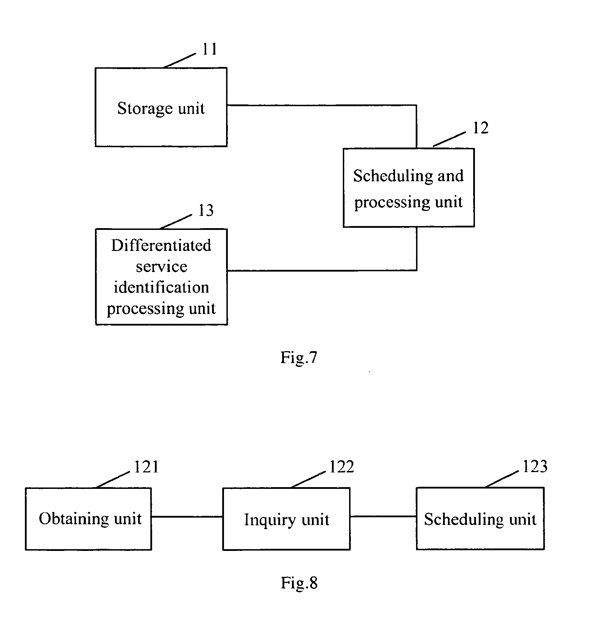

The values of SP-side TON and NPI fields may typically be stored at the short message center or in a Number Portability (NP) database. The TON and the NOI are typically provided with a default value, therefore in an embodiment of the disclosure, the stored TON and NPI may be modified with a differentiated service identification processing unit 13 as illustrated in Figure 8 in order to enable a differentiated service identification to correspond to, i.e., match with, a user type. The differentiated service identification processing unit may be disposed at the short message center or on the NP database.

Correspondingly in an embodiment of the disclosure, the short message center may obtain an SP-side differentiated service identification corresponding to a user type in accordance with a short message in the following two approaches.

In one approach where the differentiated service identification processing unit is disposed at the short message center, the short message center may search in user information stored in advance at the short message center for a user type in a relevant service provided by the SP in accordance with a user MSISDN number, that is, a short message Origination Address (OA) carried in a received short message, and an SP-num, i.e., a Destination Address (DA), obtain an SP-side differentiated service identification matching with the user type. If the user is a normal user and values of TON and NIP stored currently match with a normal user, the differentiated service identification processing unit may not modify the values of TON and NPI or otherwise modify them; and if the user is a VIP user and the values of TON and NIP stored currently are default values matching with a normal user, the differentiated service identification processing unit may modify the default values of TON and NPI to values of TON and NPI matching with a VIP user and obtain a number replacement result.

In the other approach where the differentiated service identification processing unit is disposed on the NP database, the short message center transmits a received short message to the NP database, and the NP database obtains the user type in the relevant service provided by the SP in accordance with user information stored at the NP database, then performs operations similar to those of the short message center as described above in accordance with the user type, and thereafter sends a number replacement result to the short message center.

For example, Table 1 illustrates an embodiment of the TON/SP-num/NPI number modification function.

**Table 1**

| OA | DA | INT | Before TON/SP-num/NPI | After TON/SP-nm/NPI |
|---|---|---|---|---|
| 139123 | 1001 | Gateway | 1/1001/1 | 0/1001/1 |
| 1001 | 139123 | 1001 | 1/1001/1 | 0/1001/1 |
| 139123 | 1002 | Gateway | 1/1002/1 | 0/1002/1 |
| 1002 | 139123 | 1002 | 1/1002/1 | 0/1002/1 |

Table 1 relates to two access service codes of the same SP, "1001" and "1002" respectively. In Table 1, "Before TON/SP-num/NPI" is an unmodified TON/SP-num/NPI, "After TON/SP-num/NPI" is a modified TON/SP-num/NPI, and INT is an account number of an interface via which a short message is submitted to the short message center. In the present embodiment, the short message center may be notified through the INT in combination with an OA and a DA of a short message about when to obtain an SP-side differentiated service identification corresponding to the user type. Since in a practical application, the short message center will not perceive whether a status of a short message at the short message center is of entering the short message center or waiting for transmission from the short message center, therefore in a specific implementation, the short message center shall be notified about in which status of a short message at the short message center to obtain a differentiated service identification. As presented in Table 1, the short message center may obtain a relevant differentiated service identification when a short message is in a status of entering the short message center, where the INT is Gateway for a short message with the OA being the user and the DA being the SP, or the INT is an access code of the SP for a short message with the OA being the SP and the DA being the user. On the contrary, if the INT is Gateway for a short message with the OA being the SP and the DA being the user, it indicates that the short message center obtains a differentiated service identification when the short messages in a status of waiting for transmission from the short message center.

The information depicted in Table 1 is applicable to two application seconarios. One scenario relates to the case that the TON and NPI are not modified, and in this case, the TON and NPI each takes a default value of 1 in the numbers as indicated in the "Before TON/SP-num/NPI". The differentiated service identification processing unit operates in accordance with the user type. If the user is a VIP user of the SP "1001", the differentiated service identification processing unit modifies the value of the field of TON, on the side of SP "1001", corresponding to the user from 1 to 0 without changing the value of the field of NPI, and if the user is a VIP user of the SP "1002", modifies the value of the field of TON, on the side of SP "1002", corresponding to the user from 1 to 0 without changing the value of the field of NPI. Additionally, if the user is a normal user, the short message center may not modify the values of the fields of TON and NPI, on the side of SP, corresponding to the user to obtain a final number replacement result.

In the other scenario to which Table 1 is applicable, a user was originally a normal user of the SP "1001" or the SP "1002" and thereafter is updated to a VIP user of the SP, then the differentiated service identification processing unit may also modify the values of the fields of TON and NPI, on the side of SP, corresponding to the user and obtains a final number replacement result.

The above number replacement result is a differentiated service identification corresponding to the user. In the embodiment of the disclosure, the short message center may obtain a corresponding scheduling policy in accordance with the number replacement result to perform scheduling of the short message, and may also notify the Gateway about the obtained short message scheduling policy and the Gateway schedules the short message in accordance with the policy.

Further in the embodiment presented in Table 1, the TON/SP-num/NPI based message scheduling is primarily to provide different scheduling policies for different user types of users in accordance with different TON/SP-num/NPI. Whereas Table 2 illustrates a list as set in an embodiment of the disclosure in which message scheduling polices correspond to differentiated service identifications. In Table 2, a combination of the TON and NPI on the user side with a user MSISDN is indicated as 1/139/1, and this indication is unmodified; and the TON and NPI on the SP side and an SP-sum are combined into a differentiated service identification, such as 1/1001/1 and 0/1001/1, and each differentiated service identification may be a |result of number replacement that is made by the short message center or NB in accordance with the user type.

**Table 2**

| TON/OA/NPI | TON/DA/NPI | Main Router | Backup Router |
|---|---|---|---|
| 1/139/1 | 1/1001/1 | 1/1001/1 | Non |
| 1/139/1 | 0/1001/1 | 0/1001/1 | 0/1002/1 |
| 1/1001/1 | 1/139/1 | Gateway | Non |
| 0/1001/1 | 1/139/1 | Gateway | Inter GW1 |

As illustrated in Table 2, for services with the SP-num being "1001" and "1002" and for scheduling of a short message from the user for transmission to the SP, the route for the short message corresponding to 139->1001, for example, is allocated to message entities of 1/1001/1 and 0/1001/1 respectively for scheduling, and the message entities of 1/1001/1 and 0/1001/1 adopt different scheduling polices: the message entity of 0/1001/1 adopts a scheduling policy for the VIP user and the message entity of 1/1001/1 adopts a scheduling policy for the normal user. In particular, the 0/1002/1 is set as a backup for message entity of 0/1001/1, and the message may be sent through 0/1002/1 in the case that 0/1001/1 becomes abnormal. Whereas the message entity of 1/1001/1 is not provided with a backup. That is, the short message center may perform differentiated scheduling on a short message of the user based on the TON/SP-num/NPI corresponding to the user type. A 139 user is a VIP user for the service corresponding to 1001, and a corresponding short message scheduling policy is that the SP sets for the user a main route corresponding to 0/1001/1 and enables a backup route corresponding to 0/1002/1 in the case that the main route is disabled, that is, a short message may be sent through a scheduling queue corresponding to 0/1002/1 in the case that the route of scheduling queue corresponding to 0/1001/1 becomes abnormal. If the user type of the 139 user changes, its differentiated service identification will be modified by the differentiated service identification processing unit accordingly, that is, "0/1001/1" is modified to "1/1001/1", then the 139 user is a normal user of the service corresponding to 1001, and a scheduling queue corresponding to 1/1001/1 is not provided with a backup route.

Similarly, scheduling of short messages from the SP for transmission to different users may adopt different message scheduling policies, for example, the routing of 1001->139 is treated differently, wherein a message of 0/1001/1 will be transferred to an Inter GW1 (interworking gateway) for processing if it is failed to be sent by the Gateway, while a message of 1/1001/1 will be processed in accordance with a normal message processing policy.

It shall be noted that the above Table 1 and Table 2 are merely examples and data in a practical application may be added or deleted as required.

Further, a file of number replacement modification rule and information of message scheduling policy may be stored at the short message center in a form of database or file and updated in synchronization via a database interface or an FTP interface.

Specific applications will be described below in two short message transmission flows of Mobile Original Application Terminative (MOAT) in an uplink process from users to the SP and Application Original Mobile Terminative (AOMT) form the SP to users.

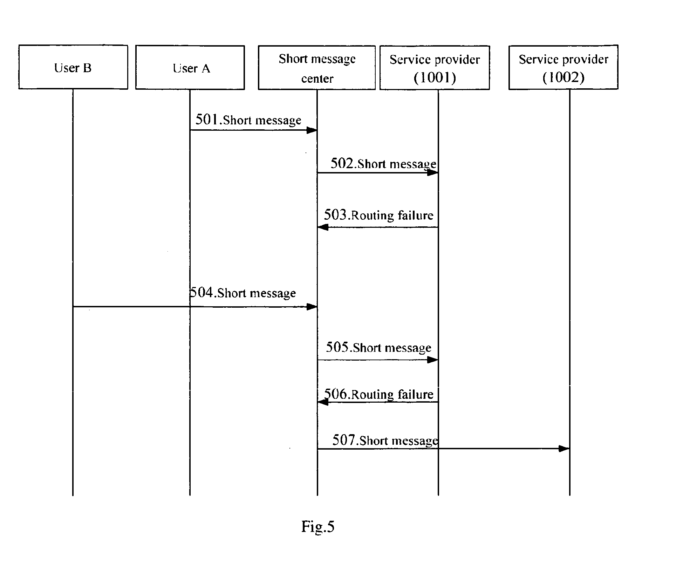

Referring to Figure 5, this figure is a schematic diagram of MOAT.

A service access code corresponding to a service provided by the SP is 1001, and for the service corresponding to the service access code, a user A and a user B belong to different user types. In order to distinguish in service level and in service registration, the SP requests the short message center to set different "TON/NPI" number modification rules for the user type to which the user A belongs and the user type to which the user B belongs, and thus the TON/NPI number modification operation on MO short messages initiated from the user A and the user B will be implemented at the short message center. As illustrated in Figure 5, the user A submits an MO short message, the callee is the SP, the SP-side TON is 1 and the SP-side NPI is also 1; the user B submits an MO short message, the callee is the SP, the SP-side TON is modified to 0 and the SP-side NPI is 1; and the short message applies different message scheduling policies in accordance with different TON/SP-sum/NPI to satisfy a service operation requirement of the SP.

Specifically in the above service, according to the message scheduling policy corresponding to the user type of the user A, if the routing of the short message transmitted from the user A fails, no alternative processing for the message will be taken into account after the failure, and in the case of the message scheduling policy corresponding to the user type of the user B, an attempt on a backup path will be made if the routing the short message transmitted from the user B fails.

The flow as illustrated in Figure 5 includes the following steps.

Step 501: The user A submits a short message to the short message center for transmission to the SP "1001".

Step 502: The short message center acquires that the user A is a normal user of the SP "1001", and assigns the SP-side TON and NPI each with 1, obtains a short message scheduling policy corresponding to the normal user of the SP "1001" in accordance with the TON/SP-sum/NPI and routes the short message to the SP "1001".

In the step 502, the short message center operates in accordance with whether the user type of the user A in the service provided by the SP "1001" matches with the corresponding values of SP-side TON and NPI, and if there is a match, the values of TON and NPI may not be modified; otherwise they will be modified, that is, the TON and NPI will be reassigned each with a value. Thereafter, the short message center may search for the corresponding short message scheduling policy according to a preset correspondence relationship between the value of TON/SP-sum/NPI and the short message scheduling policy and schedule the short message.

Step 503: The short message center receives information on routing failure and ends transmission of the short message in view of the short message scheduling policy in which no backup route is provided for transmission of a short message of the normal user by the SP "1001".

The above step 501 to step 503 present a procedure in which the short message center schedules the short message transmitted from the user A to the SP "1001".

Step 504: The user B submits a short message to the short message center for transmission to the SP "1001".

Step 505: The short message center acquires that the user B is a VIP user of the SP "1001" and assigns the SP-side TON with 0 and the SP-side NPI with 1, and routes the short message to the SP "1001" in accordance with the short message scheduling policy corresponding to the VIP user of the SP "1001".

Descriptions of assigning by the short message center of values to the SP-side TON and NPI corresponding to the user B and descriptions of obtaining the short message scheduling policy and scheduling the short message by the short message center in the step 505 are analogous to those with reference to step 502 and will not be repeated.

Step 506: The short message center receives information on routing failure.

Step 507: The short message center transmits the short message from the user B to the SP "1002" through a backup route according to the short message scheduling policy in which the backup route is provided for the VIP user by the SP "1001".

The above step 504 to step 507 present a procedure in which the short message center schedules the short message transmitted from the user B to the SP "1001".

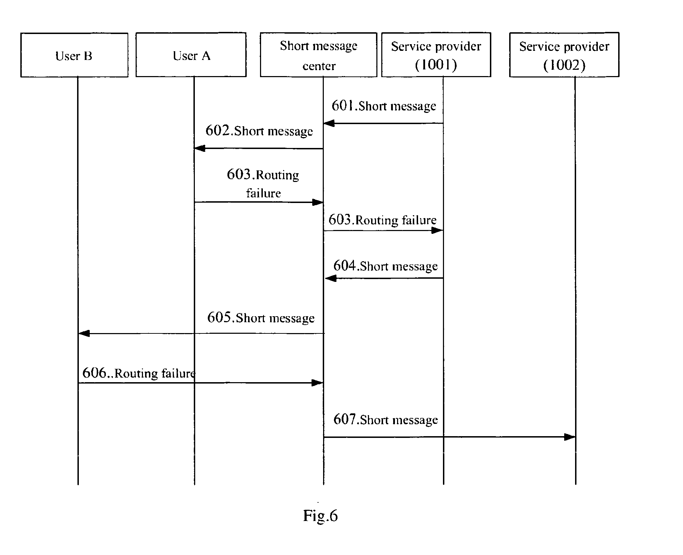

Referring to Figure 6, this figure is a schematic diagram of AOMT.

In the MT flow, the Service Provider sets different TONs/NPIs for different groups of users when the Service Provider transmits short messages for the different groups of users. As illustrated in Figure 6, in the present embodiment, the TON and the NPI corresponding to the user type of the user A each is set as 1; the TON and the NPI corresponding to the user type of the user B are set as 0 and 1, respectively; and the short message center applies different message scheduling policies in accordance with different values of the field of TON/SP-sum/NPI to satisfy a service operation requirement of the Service Provider.

Specifically, in the service implemented in the embodiment, in accordance with the message scheduling policy corresponding to the user type of user A, the short message transmitted from user A is sent only via a signaling interface, and information on message issuing failure will be returned if the issuing attempt fails for a plurality of times. In accordance with the message scheduling policy corresponding to the user type of user B, a short message transmitted from user B is sent preferably via a signaling interface and will be transferred along an alternative path (Inter GW1) if the issuing attempt fails for a plurality of times.

The flow includes the following steps.

Step 601: The SP submits a short message to the short message center for transmission to the user A.

Step 602: The short message center acquires that the user A is a normal user of the SP, and assigns the SP-side TON and NPI each with 1, obtains a short message scheduling policy corresponding to the normal user of the SP in accordance with the TON/SP-sum/NPI and routes the short message to the user A.

Descriptions of assigning by the short message center of values to the SP-side TON and NPI corresponding to the user A and descriptions of obtaining the short message scheduling policy and scheduling the short message by the short message center in the step 602 are analogous to those with reference to the step 502 and will not be repeated.

Step 603: The short message center receives information on routing failure and returns the information on routing failure to the SP to end transmission of the short message in view of the short message scheduling policy in which no backup route is provided for transmission of a short message of the normal user by the SP.

The above step 601 to step 603 present a procedure in which the short message center schedules the short message transmitted from the SP to the user A.

Step 604: The SP submits a short message to the short message center for transmission to the user B.

Step 605: The short message center acquires that the user B is a VIP user of the SP and assigns the SP-side TON and NPI with 0 and 1 respectively and routes the short message to the user B in accordance with the short message scheduling policy corresponding to the VIP user of the SP.

Descriptions of assigning by the short message center of values to the SP-side TON and NPI corresponding to the user B and descriptions of obtaining the short message scheduling policy and scheduling the short message by the short message center in the step 605 are analogous to those with reference to the step 502 and will not be repeated.

Step 606: The short message center receives information on routing failure.

Step 607: The short message center routes the short message from the SP to the Inter GW1 through a backup route according to the short message scheduling policy in which the backup route is provided for the VIP user by the SP.

The above Step 604 to Step 607 present a procedure in which the short message center schedules the short message transmitted from the SP to the user B.

As can be seen from the flows illustrated in Figure 5 and Figure 6 that, in the embodiments of the invention, the short message center schedules short messages that are sent from the users to the SP in accordance with a short message scheduling policy corresponding to the TON/SP-sum/NPI, i.e., the TON and NPI that corresponds to the user type of the user belongs to in the service provided by the SP, so as to satisfy a service operation requirement of the SP.

Another aspect of the disclosure will be described below. Referring to Figure 7, Figure 7 is a schematic diagram of function modules in the short message center, which enables the Service Provider to provide dedifferentiated services, according to an embodiment of the disclosure.

As illustrated in Figure 7, the short message center mainly includes a storage unit 11 and a scheduling and processing unit 12.

The storage unit 11 in the embodiment stores correspondence relationships between differentiated service identifications of different user types of the same Service Provider and different message scheduling polices. For example and with reference to the foregoing descriptions, if the differentiated service identifications of the different user types of the same Service Provider are different values of the field of TON/SP-sum/NPI of the same Service Provider, the storage unit 11 in the disclosure mainly stores correspondence relationships between the different values of the field of TON/SP-sum/NPI of the same Service Provider and the different message scheduling polices.

The scheduling and processing unit 12 in the embodiment is mainly adapted to inquiry the correspondence relationships stored in the storage unit 11 in accordance with differentiated service identifications of the user types that are carried in short messages to obtain the respective message scheduling policies and to schedule the short messages in accordance with the obtained message scheduling policies. The short messages are communicated between the Service Provider and the users of the different user types, wherein the users belong to the Service Provider. For example, for a differentiated service identification of a user type of the same Service Provider being a certain value of the field of TON/SP-sum/NPI, the scheduling and processing unit 12 may inquire the correspondence relationship in accordance with the value of the field of TON/SP-sum/NPI in a short message and obtain the corresponding message scheduling policy to schedule the message.

Referring to Figure 8, in a specific implementation, the scheduling and processing unit 12 mainly includes an obtaining unit 121, an inquiry unit 122 and a scheduling unit 123.

The obtaining unit 121 in the embodiment is mainly adapted to obtain the differentiated service identification of the user type that is provided in a short message communicated between the Service Provider and the user belonging to the Service Provider.

The inquiry unit 122 in the embodiment is mainly adapted to inquiry the correspondence relationship in accordance with the obtained differentiated service identification and to obtain the corresponding scheduling policy.

The scheduling unit 123 in the embodiment is mainly adapted to schedule the short message in accordance with the message scheduling policy obtained from inquiring.

Further, the short message center may also include:

A differentiated service identification processing unit 13, mainly adapted to add a new field or modify an original field in the short message communicated between the Service Provider and the user belonging to the Service Provider to form a corresponding differentiated service identification. For example, for the above differentiated service identifications of the different user types of the same Service Provider being the values of the field of TON/SP-sum/NPI, the TON and NPI are the TON and NPI of the Service Provider side. If a user terminal may not modify the values of the fields of TON and NPI of the Service Provider in a short message, the differentiated service identification processing unit 13 may modify the values of the fields of TON and NPI in the short message in accordance with the user type corresponding to the user number for transmitting the short message according to the disclosure.

It shall be noted that since the Service Provider may modify the values of the fields of TON and NPI of the Service Provider in the TON/SP-sum/NPI, in the present embodiment, for a short message sent from the Service Provider, the Service Provider may also modify the values of the fields of TON and NPI of the Service Provider in the short message in accordance with the differentiated service group of users corresponding to the user number for receiving the short message.

In the above technical solutions provided in the embodiments of the disclosure, the short message center obtains the relevant short message scheduling policy in accordance with the obtained differentiated service identifications corresponding to the user type and the correspondence relationship between the differentiated service identification and the corresponding short message scheduling policy and schedules the short message in accordance with the policy. That is, in the embodiments of the disclosure, the user types of users enjoying differentiated services provided by the same Service Provider are different and the corresponding short message scheduling policies are different, thus scheduling of short messages may be implemented based on the short message scheduling policies corresponding to the user types, and further differentiated services may be provided for different types of users without influence on the services provided by the Service Provider to make the users enjoy equally the differentiated services provided by the Service Provider.

The foregoing descriptions are merely some preferred embodiments of the invention, and it shall be noted that numerous modifications and variations may be made by those ordinarily skilled in the art without departing from the invention and that these modifications and variations shall also be considered as falling within the scope of the invention.

## Claims

1. A method for transmitting a short message, comprising:
receiving (S101) a short message, which is transmitted from a user to a Service Provider, SP, to which the user belongs;
obtaining (S102) a differentiated service identification corresponding to a user type of the user, and obtaining a corresponding short message scheduling policy in accordance with a preset correspondence relationship between the differentiated service identification and the short message scheduling policy corresponding to the differentiated service identification, wherein the differentiated service identification comprises a value of a field of Type of Number, TON, and a value of a field of Numbering Plan ID, NPI on the SP side corresponding to the user type and an SP service access code; and
transmitting (S103) the short message to the Service Provider according to the short message scheduling policy.

2. The method according to claim 1, wherein obtaining the differentiated service identification corresponding to the user type of the user comprises:
searching, in stored user information, the user type of the user according to a source address and a destination address carried in the short message, and obtaining the corresponding differentiated service identification in accordance with the user type.

3. The method according to claim 2, wherein obtaining the corresponding differentiated service identification in accordance with the user type comprises:
matching stored values of the fields of TON and NPI on the SP side with the user type; if there is a successful match, making the stored values of the fields of TON and NPI on the SP side as the value of the field of TON and value of the field of NPI on the SP side corresponding to the user type; and if the match fails, modifying the stored values of the fields of TON and NPI on the SP side into the value of the field of TON and value of the field of NPI on the SP side corresponding to the user type.

4. The method according to claim 1, wherein obtaining the differentiated service identification corresponding to the user type of the user comprises:
submitting the short message to a Number Portability, NP, database, and searching, by the NP database, in the database the user type of the user, and obtaining the corresponding differentiated service identification in accordance with the user type; and
receiving the differentiated service identification transmitted from the NP database.

5. The method according to claim 4, wherein obtaining the corresponding differentiated service identification comprises:
matching values of the fields of TON and NPI on the SP side stored on the NB with the user type; if there is a successful match, making the stored values of the fields of TON and NPI on the SP side as the value of the field of TON and value of the field of NPI on the SP side corresponding to the user type; and if the match fails, modifying the stored values of the fields of TON and NPI on the SP side into the value of the field of TON and value of the field of NPI on the SP side corresponding to the user type.

6. A method for transmitting a short message, comprising:
receiving (S201) a short message, which is transmitted from a Service Provider, SP, to a user belonging to the SP;
obtaining (S202) a differentiated service identification corresponding to a user type of the user, and obtaining a corresponding short message scheduling policy in accordance with a preset correspondence relationship between the differentiated service identification and the short message scheduling policy corresponding to the differentiated service identification, wherein the differentiated service identification comprises a value of a field of Type of Number, TON, and a value of a field of Numbering Plan ID, NPI, on the SP side corresponding to the user type and an SP service access code; and
transmitting (S203) the short message to the user according to the short message scheduling policy.

7. The method according to claim 6, wherein obtaining the differentiated service identification corresponding to the user type of the user comprises:
searching, in stored user information, the user type of the user in accordance with a source address and a destination address carried in the short message, and obtaining the corresponding differentiated service identification in accordance with the user type.

8. The method according to claim 7, wherein obtaining the corresponding differentiated service identification in accordance with the user type comprises:
matching stored values of the fields of TON and NPI on the SP side with the user type; if there is a successful match, making the stored values of the fields of TON and NPI on the SP side as the value of the field of TON and value of the field of NPI on the SP side corresponding to the user type; and if the match fails, modifying the stored values of the fields of TON and NPI on the SP side into the value of the field of TON and value of the field of NPI on the SP side corresponding to the user type.

9. The method according to claim 6, wherein obtaining the differentiated service identification corresponding to the user type of the user comprises:
transferring the short message to a Number Portability, NP, database, and searching, by the NP database, in the database the user type of the user, and obtaining the corresponding differentiated service identification in accordance with the user type; and
receiving the differentiated service identification transmitted from the NP database.

10. The method according to claim 9, wherein obtaining the corresponding differentiated service identification comprises:
matching values of the fields of TON and NPI on the SP side stored on the NB with the user type; if there is a successful match, making the stored values of the fields of TON and NPI on the SP side as the value of the field of TON and value of the field of NPI on the SP side corresponding to the user type; and if the match fails, modifying the stored values of the fields of TON and NPI on the SP side into the value of the field of TON and value of the field of NPI on the SP side corresponding to the user type.

11. A short message center, **characterized by**, comprising a storage unit (11) and a scheduling and processing unit (12), wherein
the storage unit (11) is adapted to store a correspondence relationship between an Service Provider-side, SP-side, differentiated service identification corresponding to a user type of a user and a short message scheduling policy corresponding to the differentiated service identification; and
the scheduling and processing unit (12), upon reception of a short message submitted from the user for transmission to a Service Provider of the user or upon reception of a short message submitted from the Service Provider for transmission to the user belonging to the SP, is adapted to obtain the short message scheduling policy corresponding to the differentiated service identification with use of the differentiated service identification corresponding to the user type of the user and with use of the correspondence relationship stored in the storage unit (11), and to schedule the received short message in accordance with the message scheduling policy,
wherein the differentiated service identification comprises a value of a field of Type of Number, TON, and a value of a field of Numbering Plan ID, NPI, on the SP side corresponding to the user type and an SP service access code.

12. The short message center according to claim 11, wherein the scheduling and processing unit (12) comprises an obtaining unit (121), an inquiry unit (122) and a scheduling unit (123), and wherein
the obtaining unit (121), upon reception of the short message submitted from the user for transmission to the Service Provider of the user or upon reception of the short message submitted from the Service Provider for transmission to the user belonging to the SP, is adapted to obtain the differentiated service identification corresponding to the user type of the user;
the inquiry unit (122) is adapted to inquiry from the storage unit (11) about the message scheduling policy corresponding to the differentiated service identification obtained by the obtaining unit (121); and
the scheduling unit (123) is adapted to schedule the received short message in accordance with the message scheduling policy obtained by the inquiry unit (122).

13. The short message center according to claim 11 or 12, further comprising:
a differentiated service identification processing unit (13) adapted to modify the differentiated service identification in the short message received by the scheduling and processing unit (12) in accordance with the user type of the user.

## Patentansprüche

1. Verfahren zum Senden einer Kurznachricht, mit den folgenden Schritten:
Empfangen (S101) einer Kurznachricht, die von einem Benutzer zu einem Dienstanbieter SP, zu dem der Benutzer gehört, gesendet wird;
Erhalten (S 102) einer differenzierten Dienstidentifikation entsprechend einem Benutzertyp des Benutzers und Erhalten einer entsprechenden Kurznachrichten-Ablaufplanungsrichtlinie gemäß einer voreingestellten Korrespondenzbeziehung zwischen der differenzierten Dienstidentifikation und der Kurznachrichten-Ablaufplanungsrichtlinie entsprechend der differenzierten Dienstidentifikation, wobei die differenzierte Dienstidentifikation einen Wert eines Felds des Type of Number TON und einen Wert eines Felds der Numbering Plan ID NPI auf der SP-Seite entsprechend dem Benutzertyp und einem SP-Dienstzugangscode umfasst; und
Senden (S 103) der Kurznachricht zu dem Dienstanbieter gemäß der Kurznachrichten-Ablaufplanungsrichtlinie.

2. Verfahren nach Anspruch 1, wobei das Erhalten der differenzierten Dienstidentifikation entsprechend dem Benutzertyp des Benutzers Folgendes umfasst:
Suchen des Benutzertyps des Benutzers in gespeicherten Benutzerinformationen gemäß einer in der Kurznachricht geführten Quellenadresse und Zieladresse und Erhalten der entsprechenden differenzierten Dienstidentifikation gemäß dem Benutzertyp.

3. Verfahren nach Anspruch 2, wobei das Erhalten der entsprechenden differenzierten Dienstidentifikation gemäß dem Benutzertyp Folgendes umfasst:
Prüfen gespeicherter Werte der Felder des TON und der NPI auf der SP-Seite auf Übereinstimmung mit dem Benutzertyp; wenn eine erfolgreiche Übereinstimmung vorliegt, Setzen der gespeicherten Werte der Felder des TON und der NPI auf der SP-Seite als den Wert des Felds des TON und den Wert des Felds der NPI auf der SP-Seite entsprechend dem Benutzertyp; und wenn die Übereinstimmungsprüfung erfolglos ist, Modifizieren der gespeicherten Werte der Felder des TON und der NPI auf der SP-Seite zu dem Wert des Felds des TON und dem Wert des Felds der NPI auf der SP-Seite entsprechend dem Benutzertyp.

4. Verfahren nach Anspruch 1, wobei das Erhalten der differenzierten Dienstidentifikation entsprechend dem Benutzertyp des Benutzers Folgendes umfasst:
Leiten der Kurznachricht zu einer Datenbank der Number Portability NP und Suchen in der Datenbank durch die NP-Datenbank des Benutzertyps des Benutzers und Erhalten der entsprechenden differenzierten Dienstidentifikation gemäß dem Benutzertyp; und
Empfangen der von der NP-Datenbank gesendeten differenzierten Dienstidentifikation.

5. Verfahren nach Anspruch 4, wobei das Erhalten der entsprechenden differenzierten Dienstidentifikation Folgendes umfasst:
Prüfen von Werten der Felder des TON und der NPI auf der SP-Seite, die auf der NB gespeichert sind, auf Übereinstimmung mit dem Benutzertyp; wenn eine erfolgreiche Übereinstimmung vorliegt, Setzen der gespeicherten Werte der Felder des TON und der NPI auf der SP-Seite als den Wert des Felds des TON und den Wert des Felds der NPI auf der SP-Seite entsprechend dem Benutzertyp; und wenn die Übereinstimmungsprüfung erfolglos ist, Modifizieren der gespeicherten Werte der Felder des TON und der NPI auf der SP-Seite zu dem Wert des Felds des TON und dem Wert des Felds der NPI auf der SP-Seite entsprechend dem Benutzertyp.

6. Verfahren zum Senden einer Kurznachricht, mit den folgenden Schritten:
Empfangen (S201) einer Kurznachricht, die von einem Dienstanbieter SP zu einem zu dem SP gehörenden Benutzer gesendet wird;
Erhalten (S202) einer differenzierten Dienstidentifikation entsprechend einem Benutzertyp des Benutzers und Erhalten einer entsprechenden Kurznachrichten-Ablaufplanungsrichtlinie gemäß einer voreingestellten Korrespondenzbeziehung zwischen der differenzierten Dienstidentifikation und der Kurznachrichten-Ablaufplanungsrichtlinie entsprechend der differenzierten Dienstidentifikation, wobei die differenzierte Dienstidentifikation einen Wert eines Felds des Type of Number TON und einen Wert eines Felds der Numbering Plan ID NPI auf der SP-Seite entsprechend dem Benutzertyp und einem SP-Dienstzugangscode umfasst; und
Senden (S203) der Kurznachricht zu dem Benutzer gemäß der Kurznachrichten-Ablaufplanungsrichtlinie.

7. Verfahren nach Anspruch 6, wobei das Erhalten der differenzierten Dienstidentifikation entsprechend dem Benutzertyp des Benutzers Folgendes umfasst:
Suchen des Benutzertyps des Benutzers in gespeicherten Benutzerinformationen gemäß einer in der Kurznachricht geführten Quellenadresse und Zieladresse und Erhalten der entsprechenden differenzierten Dienstidentifikation gemäß dem Benutzertyp.

8. Verfahren nach Anspruch 7, wobei das Erhalten der entsprechenden differenzierten Dienstidentifikation gemäß dem Benutzertyp Folgendes umfasst:
Prüfen gespeicherter Werte der Felder des TON und der NPI auf der SP-Seite auf Übereinstimmung mit dem Benutzertyp; wenn eine erfolgreiche Übereinstimmung vorliegt, Setzen der gespeicherten Werte der Felder des TON und der NPI auf der SP-Seite als den Wert des Felds des TON und den Wert des Felds der NPI auf der SP-Seite entsprechend dem Benutzertyp; und wenn die Übereinstimmungsprüfung erfolglos ist, Modifizieren der gespeicherten Werte der Felder des TON und der NPI auf der SP-Seite zu dem Wert des Felds des TON und dem Wert des Felds der NPI auf der SP-Seite entsprechend dem Benutzertyp.

9. Verfahren nach Anspruch 6, wobei das Erhalten der differenzierten Dienstidentifikation entsprechend dem Benutzertyp des Benutzers Folgendes umfasst:
Übermitteln der Kurznachricht zu einer Datenbank der Number Portability NP und Suchen in der Datenbank durch die NP-Datenbank des Benutzertyps des Benutzers und Erhalten der entsprechenden differenzierten Dienstidentifikation gemäß dem Benutzertyp; und
Empfangen der von der NP-Datenbank gesendeten differenzierten Dienstidentifikation.

10. Verfahren nach Anspruch 9, wobei das Erhalten der entsprechenden differenzierten Dienstidentifikation Folgendes umfasst:
Prüfen von Werten der Felder des TON und der NPI auf der SP-Seite, die auf der NB gespeichert sind, auf Übereinstimmung mit dem Benutzertyp; wenn eine erfolgreiche Übereinstimmung vorliegt, Setzen der gespeicherten Werte der Felder des TON und der NPI auf der SP-Seite als den Wert des Felds des TON und den Wert des Felds der NPI auf der SP-Seite entsprechend dem Benutzertyp; und wenn die Übereinstimmungsprüfung erfolglos ist, Modifizieren der gespeicherten Werte der Felder des TON und der NPI auf der SP-Seite zu dem Wert des Felds des TON und dem Wert des Felds der NPI auf der SP-Seite entsprechend dem Benutzertyp.

11. Kurznachrichtenzentrale, **dadurch gekennzeichnet, dass** sie eine Speichereinheit (11) und eine Ablaufplanungs- und Verarbeitungseinheit (12) umfasst, wobei
die Speichereinheit (11) dafür ausgelegt ist, eine Korrespondenzbeziehung zwischen einer dienstanbieterseitigen bzw. SP-seitigen differenzierten Dienstidentifikation entsprechend einem Benutzertyp eines Benutzers und einer Kurznachrichten-Ablaufplanungsrichtlinie entsprechend der differenzierten Dienstidentifikation zu speichern; und
die Ablaufplanungs- und Verarbeitungseinheit (12) beim Empfang einer von dem Benutzer zur Übertragung zu einem Dienstanbieter des Benutzers geleiteten Kurznachricht oder beim Empfang einer von dem Dienstanbieter zur Übertragung zu dem Benutzer, der zu dem SP gehört, geleiteten Kurznachricht dafür ausgelegt ist, die Kurznachrichten-Ablaufplanungsrichtlinie entsprechend der differenzierten Dienstidentifikation unter Verwendung der differenzierten Dienstidentifikation entsprechend dem Benutzertyp des Benutzers und unter Verwendung der in der Speichereinheit (11) gespeicherten Korrespondenzbeziehung zu erhalten und den Ablauf der empfangenen Kurznachricht gemäß der Nachrichtenablaufplanungsrichtlinie zu planen,
wobei die differenzierte Dienstidentifikation einen Wert eines Felds des Type of Number TON und einen Wert eines Felds der Numbering Plan ID NPI auf der SP-Seite entsprechend dem Benutzertyp und einem SP-Dienstzugangscode umfasst.

12. Kurznachrichtenzentrale nach Anspruch 11, wobei die Ablaufplanungs- und Verarbeitungseinheit (12) eine Einheit (121) zum Erhalten, eine Einheit (122) zum Anfragen und eine Ablaufplanungseinheit (123) umfasst und wobei
die Einheit (121) zum Erhalten beim Empfang der von dem Benutzer zur Übertragung zu dem Dienstanbieter des Benutzers geleiteten Kurznachricht oder beim Empfang der von dem Dienstanbieter zur Übertragung zu dem Benutzer, der zu dem SP gehört, geleiteten Kurznachricht dafür ausgelegt ist, die differenzierte Dienstidentifikation entsprechend dem Benutzertyp des Benutzers zu erhalten;
die Einheit (122) zum Anfragen dafür ausgelegt ist, bei der Speichereinheit (11) über die Nachrichtenablaufplanungsrichtlinie entsprechend der durch die Einheit (121) zum Erhalten erhaltenen differenzierten Dienstidentifikation anzufragen; und
die Ablaufplanungseinheit (123) dafür ausgelegt ist, den Ablauf der empfangenen Kurznachricht gemäß der durch die Einheit (122) zum Anfragen erhaltenen Nachrichtenablaufplanungsrichtlinie zu planen.

13. Kurznachrichtenzentrale nach Anspruch 11 oder 12, ferner umfassend:
eine Verarbeitungseinheit (13) für differenzierte Dienstidentifikation, die dafür ausgelegt ist, die differenzierte Dienstidentifikation in der Kurznachricht, die durch die Ablaufplanungs- und Verarbeitungseinheit (12) empfangen wird, gemäß dem Benutzertyp des Benutzers zu modifizieren.

## Revendications

1. Procédé permettant de transmettre un message court, comprenant :
la réception (S101) d'un message court, qui est émis par un abonné vers un fournisseur de services, SP, auquel appartient l'abonné,
la récupération (S 102) d'une identification de service différencié correspondant au type utilisateur de l'abonné, et la récupération d'une politique correspondante de programmation de messages courts en fonction d'une relation préréglée de correspondance entre l'identification de service différencié et la politique de programmation de messages courts correspondant à l'identification de service différencié, dans lequel l'identification de service différencié comprend la valeur d'un champ type de numéro, TON, et la valeur d'un champ identificateur de plan de numérotation, NPI, du côté du fournisseur de services SP correspondant au type utilisateur ainsi qu'un code d'accès aux services du fournisseur de services SP, et
l'émission (S103) du message court vers le fournisseur de services en fonction de la politique de programmation de messages courts.

2. Procédé selon la revendication 1, dans lequel la récupération de l'identification de service différencié correspondant au type utilisateur de l'abonné comprend :
la recherche, dans des informations stockées de l'abonné, du type utilisateur de l'abonné en fonction d'une adresse source et d'une adresse de destination transportées dans le message court, ainsi que la récupération de l'identification correspondante de service différencié en fonction du type utilisateur.

3. Procédé selon la revendication 2, dans lequel la récupération de l'identification correspondante de service différencié en fonction du type utilisateur comprend :
la mise en correspondance de valeurs mémorisées des champs type de numéro TON et identificateur NPI du côté du fournisseur de services SP avec le type utilisateur ; si la mise en correspondance est réussie, l'action d'utiliser les valeurs mémorisées des champs type de numéro TON et identificateur NPI du côté du fournisseur de services SP comme valeur du champ type de numéro TON et valeur du champ identificateur NPI du côté du fournisseur de services SP correspondant au type utilisateur ; et si la mise en correspondance échoue, le changement des valeurs mémorisées des champs type de numéro TON et identificateur NPI du côté du fournisseur de services SP en la valeur du champ type de numéro TON et la valeur du champ identificateur NPI du côté du fournisseur de services SP correspondant au type utilisateur.

4. Procédé selon la revendication 1, dans lequel la récupération de l'identification de service différencié correspondant au type utilisateur de l'abonné comprend :
la soumission du message court à une base de données de portabilité de numéros, NP, et la recherche, grâce à la base de données NP, dans la base de données, du type utilisateur de l'abonné, ainsi que la récupération de l'identification correspondante de service différencié en fonction du type utilisateur, et
la réception de l'identification de service différencié transmise depuis la base de données NP.

5. Procédé selon la revendication 4, dans lequel la récupération de l'identification correspondante de service différencié comprend :
la mise en correspondance de valeurs des champs type de numéro TON et identificateur NPI du côté du fournisseur de services SP stockées sur le noeud B, NB, avec le type utilisateur ; si la mise en correspondance est réussie, l'action d'utiliser les valeurs mémorisées des champs type de numéro TON et identificateur NPI du côté du fournisseur de services SP comme valeur du champ type de numéro TON et valeur du champ identificateur NPI du côté du fournisseur de services SP correspondant au type utilisateur ; et si la mise en correspondance échoue, le changement des valeurs mémorisées des champs type de numéro TON et identificateur NPI du côté du fournisseur de services SP en la valeur du champ type de numéro TON et la valeur du champ identificateur NPI du côté du fournisseur de services SP correspondant au type utilisateur.

6. Procédé permettant de transmettre un message court, comprenant :
la réception (S201) d'un message court qui est émis par un fournisseur de services, SP, vers un abonné appartenant au fournisseur de services SP,
la récupération (S202) d'une identification de service différencié correspondant à un type utilisateur de l'abonné, ainsi que la récupération d'une politique correspondante de programmation de messages courts en fonction d'une relation préréglée de correspondance entre l'identification de service différencié et la politique de programmation de messages courts correspondant à l'identification de service différencié, dans lequel l'identification de service différencié comprend la valeur d'un champ type de numéro, TON, et la valeur d'un champ identificateur de plan de numérotation, NPI, du côté du fournisseur de services SP correspondant au type utilisateur, ainsi qu'un code d'accès aux services du fournisseur de services SP, et l'émission (S203) du message court vers l'abonné en fonction de la politique de programmation de messages courts.

7. Procédé selon la revendication 6, dans lequel la récupération de l'identification de service différencié correspondant au type utilisateur de l'abonné comprend :
la recherche, dans des informations mémorisées de l'abonné, du type utilisateur de l'abonné en fonction d'une adresse source et d'une adresse de destination transportées dans le message court, ainsi que la récupération de l'identification correspondante de service différencié en fonction du type utilisateur.

8. Procédé selon la revendication 7, dans lequel la récupération de l'identification correspondante de service différencié en fonction du type utilisateur comprend :
la mise en correspondance de valeurs mémorisées des champs type de numéro TON et identificateur NPI du côté du fournisseur de services SP avec le type utilisateur ; si la mise en correspondance est réussie, l'action d'utiliser les valeurs mémorisées des champs type de numéro TON et identificateur NPI du côté du fournisseur de services SP comme valeur du champ type de numéro TON et valeur du champ identificateur NPI du côté du fournisseur de services SP correspondant au type utilisateur ; et si la mise en correspondance échoue, le changement des valeurs mémorisées des champs type de numéro TON et identificateur NPI du côté du fournisseur de services SP en la valeur du champ type de numéro TON et la valeur du champ identificateur NPI du côté du fournisseur de services SP correspondant au type utilisateur.

9. Procédé selon la revendication 6, dans lequel la récupération de l'identification de service différencié correspondant au type utilisateur de l'abonné comprend :
le transfert du message court à une base de données de portabilité de numéros, NP, ainsi que la recherche, grâce à la base de données NP, dans la base de données du type utilisateur de l'abonné, ainsi que la récupération de l'identification correspondante de service différencié en fonction du type utilisateur, et
la réception de l'identification de service différencié transmise depuis la base de données NP.

10. Procédé selon la revendication 9, dans lequel la récupération de l'identification correspondante de service différencié comprend :
la mise en correspondance de valeurs des champs type de numéro TON et identificateur NPI du côté du fournisseur de services SP stockées sur le noeud B, NB, avec le type utilisateur ; si la mise en correspondance est réussie, l'action d'utiliser les valeurs mémorisées des champs type de numéro TON et identificateur NPI du côté du fournisseur de services SP comme valeur du champ type de numéro TON et valeur du champ identificateur NPI du côté du fournisseur de services SP correspondant au type utilisateur ; et si la mise en correspondance échoue, le changement des valeurs mémorisées des champs type de numéro TON et identificateur NPI du côté du fournisseur de services SP en la valeur du champ type de numéro TON et la valeur du champ identificateur NPI du côté du fournisseur de services SP correspondant au type utilisateur.

11. Centre de messages courts, **caractérisé en ce qu'**il comprend une unité de stockage (11) et une unité de programmation et de traitement (12), dans lequel :
l'unité de stockage (11) est conçue pour mémoriser une relation de correspondance entre une identification de service différencié du côté du fournisseur de services, SP, correspondant au type utilisateur d'un abonné et une politique de programmation de messages courts correspondant à l'identification de service différencié, et
l'unité de programmation et de traitement (12), à la réception d'un message court soumis par l'abonné en vue d'une émission vers un fournisseur de services de l'abonné, ou à la réception d'un message court soumis par le fournisseur de services en vue d'une émission vers l'abonné appartenant au fournisseur de services SP, est conçue pour récupérer la politique de programmation de messages courts correspondant à l'identification de service différencié grâce à l'utilisation de l'identification de service différencié correspondant au type utilisateur de l'abonné, et grâce à l'utilisation de la relation de correspondance mémorisée dans l'unité de stockage (11), ainsi que pour programmer le message court reçu en fonction de la politique de programmation de messages courts,
dans lequel l'identification de service différencié comprend la valeur d'un champ type de numéro, TON, et la valeur d'un champ identificateur de plan de numérotation, NPI, du côté du fournisseur de services SP, correspondant au type utilisateur, ainsi qu'un code d'accès aux services du fournisseur de services SP.

12. Centre de messages courts selon la revendication 11, dans lequel l'unité de programmation et de traitement (12) comprend une unité de récupération (121), une unité de consultation (122) et une unité de programmation (123), et dans lequel l'unité de récupération (121), à la réception du message court soumis par l'abonné en vue d'une émission vers le fournisseur de services de l'abonné, ou à la réception du message court soumis par le fournisseur de services en vue d'une émission vers l'abonné appartenant au fournisseur de services SP, est conçue pour récupérer l'identification de service différencié correspondant au type utilisateur de l'abonné, l'unité de consultation (122) est conçue pour effectuer une consultation à partir de l'unité de stockage (11) sur la politique de programmation de messages courts correspondant à l'identification de service différencié récupérée par l'unité de récupération (121), et l'unité de programmation (123) est conçue pour programmer le message court reçu en fonction de la politique de programmation de messages courts récupérée par l'unité de consultation (122).

13. Centre de messages courts selon la revendication 11 ou 12, comprenant en outre :
une unité de traitement d'identification de service différencié (13) conçue pour modifier l'identification de service différencié dans le message court reçu par l'unité de programmation et de traitement (12) en fonction du type utilisateur de l'abonné.
